Europäisches Patentamt

European Patent Office

Office européen des brevets

(11) Publication number: **0 194 143 B1**

(12) **EUROPEAN PATENT SPECIFICATION**

(45) Date of publication of patent specification: **06.11.91**   (51) Int. Cl.⁵: **H04M 11/08**

(21) Application number: **86301566.5**

(22) Date of filing: **05.03.86**

(54) Videotex system.

(30) Priority: **05.03.85 JP 43266/85**

(43) Date of publication of application:
**10.09.86 Bulletin 86/37**

(45) Publication of the grant of the patent:
**06.11.91 Bulletin 91/45**

(84) Designated Contracting States:
**AT DE FR GB NL**

(56) References cited:
**AT-B- 375 234**
**DE-A- 2 950 296**
**DE-A- 3 310 745**
**GB-A- 2 111 349**

**NACHRICHTENTECHNISCHE ZEITSCHRIFT N.T.Z., vol. 37, no. 4, March 1983, pages 214-220, Berlin, DE; J. GABEL et al.: "Der CEPT-Standard als Grundlage des Bildschirmtext-Dienstes"**

**COMMUTATION & TRANSMISSION, vol. 5, no. 4, December 1183, pages 71-82, Issy-les-Moulineaux, FR; M. PESTRE et al.: "Le terminal teletex TLX 100"**

(73) Proprietor: **SONY CORPORATION**
**7-35 Kitashinagawa 6-Chome Shinagawa-ku Tokyo 141(JP)**

(72) Inventor: **Nakagawa, Yutaka c/o Sony Corporation**
**7-35 Kitashinagawa 6-chome Shinagawa-ku Tokyo(JP)**
Inventor: **Suga, Ryoichi c/o Sony Corporation**
**7-35 Kitashinagawa 6-chome Shinagawa-ku Tokyo(JP)**
Inventor: **Ishikawa, Tomikazu c/o Sony Corporation**
**7-35 Kitashinagawa 6-chome Shinagawa-ku Tokyo(JP)**
Inventor: **Mochida, Hiroya c/o Sony Corporation**
**7-35 Kitashinagawa 6-chome Shinagawa-ku Tokyo(JP)**

(74) Representative: **Ayers, Martyn Lewis Stanley et al**
**J.A. KEMP & CO. 14 South Square Gray's Inn London, WC1R 5EU(GB)**

E.D.N. ELECTRICAL DESIGN NEWS, vol. 28, no. 5, 3rd March 1983, pages 109-118, Boston, Massachusetts, US; A. GOLDBERGER et al.: "Understand datacomm protocols by examining their structures"

FUNKSCHAU, no. 19, September 1981, pages 62-64, München, DE; H.J. ROTHAMEL: "Bildschirmtext im Büro"

## EP 0 194 143 B1

**Description**

This invention relates to a videotex system in which a data base center and a remote user terminal are in data communication with each other.

Present day videotex systems are generally of the type having a center (host computer) having a data base, and a user terminal apparatus. The center and the user terminal are connected together via a network line, such as a telephone network line, local area network (LAN) or cable television (CATV) lines. A black and white or color CRT display, a full keyboard, a printer and a cassette tape recorder, for example, can be connected to the user terminal apparatus as peripheral apparatus.

When data is requested by the keyboard, such data is transmitted through the network line to the center and corresponding answering data is returned through the network line to the user terminal apparatus and is then displayed on the display as, for example, a color picture. At that time, if a copy key of the keyboard is depressed, the picture, displayed on the display, may be printed out on paper by the printer as a hard copy. Alternatively, the data corresponding to the displayed picture is converted to an FSK (frequency shift keying) signal and is then fed to the tape recorder to be saved on a cassette tape.

Thus, videotex services are two way services which provide users with access to "page" or "frames" that include alphanumeric and graphic information. Certain signal protocols have been developed by industry associations to standardize the interchange format. One such standard is the North American Presentation Level Protocol (NAPLES) which is described in the publication "Videotex/Teletex Presentation Level Protocol Syntax (North American PLPS)," published September 9, 1983, by the American National Standards Institute and the Canadian Standards Association.

As described above, according to prior art videotex systems, the operation (processing) of the center is mono-functional and passive. When a request is transmitted from the user terminal apparatus, the requested picture is only displayed on the display. The center cannot force the terminal to display information independently of the commands entered by the user of the terminal. For example, in the event of a disaster, the data base center could not send a command to the user terminal to display disaster instructions unless the user was already in data communication with the center.

Moreover, audio visual apparatus such as a compact disc (CD) player or a video disc player and general apparatus of various kinds cannot be operatively connected to the prior art user terminal apparatus for any practical purpose, the user terminal apparatus can only serve as a display. For example, if a picture corresponding to the data transmitted from the center is superimposed upon a picture reproduced by the video disc player, both of them are displayed independently in respect of their information content and hence such a display has no merit.

Although the prior art videotex system is a bidirectional system, its range of functions and ability are poor and the hardware and the software available to the user are limited. This invention is intended to utilize the bidirectionality of the videotex system to a greater extent and to considerably expand the range of functions and ability thereof while remaining in compliance with the NAPLPS standard.

DE-A-3310745 (Siemens AG) discloses a remote access data information system in accordance with the pre-characterizing portions of claims 1 and 6 in which the subscriber terminals may include other devices, e.g. utility meters, which, upon a command from the data centre output their readings to it. A remote processor may also be included to provide automatic billing of the users following those meter outputs.

According to the present invention, a signal of a special format maybe received and transmitted between the data base center and the user terminal apparatus, and this signal allows the center to control the user terminal apparatus or the peripheral apparatus (external apparatus) connected thereto in accordance with the content of the signal. In the preferred embodiment such control signals are in compliance with the NAPLPS protocol.

Therefore, according to this invention, by combining the display function of a videotex terminal and the display function of a local audiovisual device, for example a video disc player, it is possible to expand the display ability of the whole system. By forcibly controlling the user terminal apparatus from the data base center, it is possible to send the user important or urgent information. It is also possible to use the user terminal apparatus as a computer having various functions, thus the range of functions, and ability thereof are extended considerably.

According to the present invention there is provided an information accessing user terminal for communicating with a remote information data center, the user terminal comprising;

a plurality of operative devices, including a display means, which are responsive to mode control signals;

input/output interface means for operatively connecting the terminal to the information data center and

3

for communicating command and data signals between the terminal and the information data center characterized by;

a microprocessor connected to the input/output interface means and each of the operative devices to control the operations of selected ones of the operative devices in response to command signals received through a keyboard, and in that the microprocessor is capable of receiving command signals from the information data center, interpreting them and sending a corresponding selected mode control signal to a selected one of said operative devices whereby the information data center can selectively control said operative devices.

The invention further provides a videotex system having an information data center which includes a programmed computer, and a remote user terminal connected to the data center for accessing information from the data center, the system including:

a plurality of operative devices, including a visual data display device, a keyboard for entering command data, and external devices, including data storage means, all at the user terminal,

input/output means for communicatively connecting the terminal and the data center together, characterized by:

a programmed terminal microprocessor connected to the input/output means and to each of the operative devices for controlling the operations of the operative devices in response to preprogrammed instructions and command signals received from the data center via the input/output means or command signals entered by the user.

The invention therefore allows a videotex user terminal to be remotely controllable by a data center and also to have peripheral devices connected to it which may be remotely controlled by a data base center.

Preferably the invention also provides a videotex terminal which can integrate the display functions of the terminal with those of a peripheral audiovisual device.

The invention will be further described by way of non-limitative example with reference to the accompanying drawings in which like numerals denote like parts and:

Figure 1 is a block diagram of the videotex terminal and system according to the invention;

Figure 2 is a diagram illustrating the format of a signal to be transmitted between the user terminal and the data base center; and

Figure 3 is a flow chart for illustrating the operation of the processing means at the terminal and the data center.

In the embodiment below, the videotex system conforms to the NAPLPS standards.

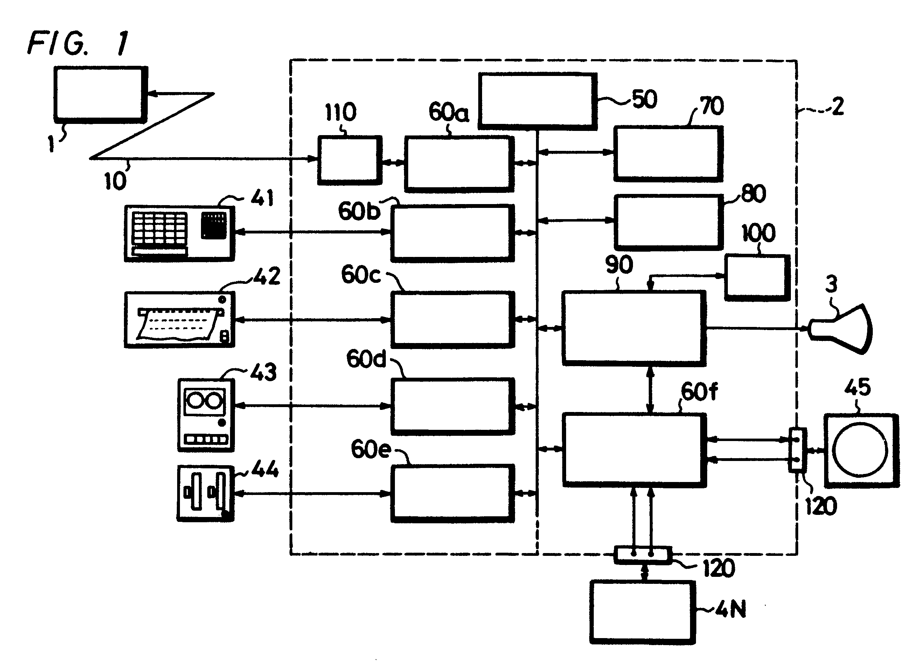

Referring to Figure 1, the user terminal apparatus 2 includes a microcomputer 50 with its I/O port (I/O interface) connected to a full keyboard 41, a printer 42, a tape recorder 43 and through a modem interface 60a to a modem 110 and a telephone line 10. These arrangements are the same as those of prior art videotex systems.

Further, and as distinguished from the prior art videotex systems, the user terminal I/O port is connected, through peripheral interfaces 60b, 60c, 60d, 60e and 60f, with new peripheral apparatus 44 to 4N. It will be understood that although such peripheral devices "46", "47", etc are not shown in the Figure, they could be, for example, a videotape recorder, a compact disc (CD) player, an audio amplifier, a personal computer, a telex, or a magnetic card reader.

The peripheral apparatus 44 to 4N and the control contents are indicated on TABLE 1. Although the details thereof will be described later, these apparatus 44 to 4N and the control contents are given identification codes DVID as shown on the same table. The prior art peripheral apparatus 41 to 43, the display 3, the user terminal apparatus 2 and the center 1 are also given identification codes DVID as shown on the same table.

TABLE 1

| Identification code DVID | Peripheral apparatus (Control content) |
|---|---|
| 20H | full keyboard 41 |
| 24H | display function |
| 26H | timer function |
| 28H | printer 42 |
| 29H | printer (reserve) |
| 2AH | printer (reserve) |
| 30H | video disc player 45 |
| 31H | video disc timer |
| 38H | tape recorder 43 |
| 40H | VTR |
| 48H | television receiver |
| 50H | audio amplifier |
| 58H | CD player |
| 59H | bell |
| 60H | personal computer |
| 68H | telex |
| 70H | magnetic card reader |
| 77H | computer of center 1 |
| 7CH | memory jump |
| 7DH | CM inserter |
| 7EH | memory down load |

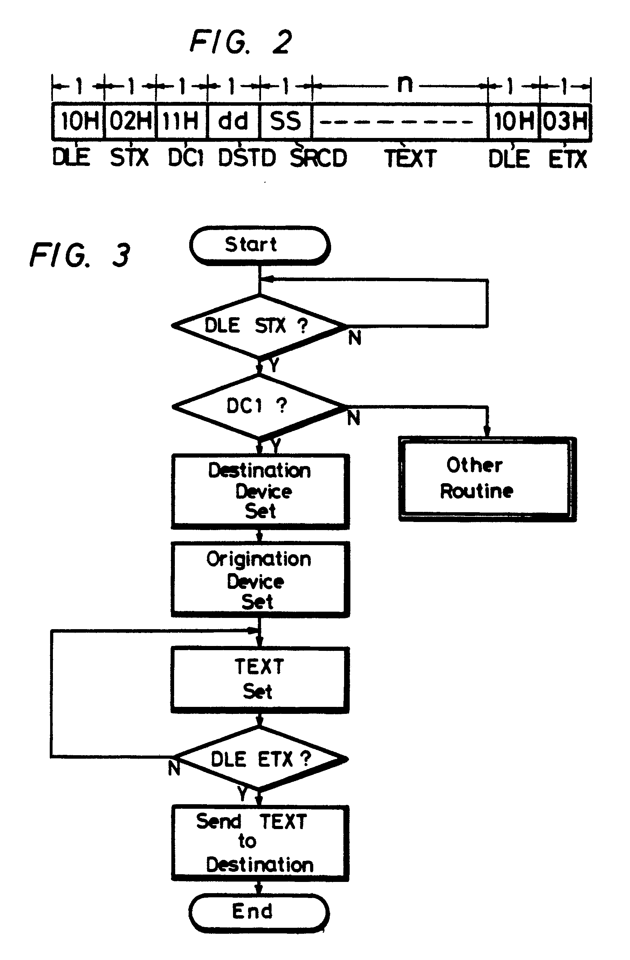

A signal Sc having a format (Sequence) shown in Fig. 2 can be transmitted and received between the center 1 and the user terminal apparatus 2 of the present invention. That is, the signal Sc has the same format with respect to the up-link direction (from the user terminal apparatus 2 to the center 1) and the down-link direction (from the center 1 to the user terminal apparatus 2). Referring to Figures 2 and 3, in the signal Sc, a first byte DLE and a second byte STX are control codes indicative of the beginning of the signal Sc (text) and the values thereof are 10H and 02H (in hexidecimal code). The CPU 50 of the terminal (or the center 1) upon receiving these codes through the modem 110 and modem interface 60a looks for a following third byte DCI which is a code indicating that the signal Sc is concerned with the control of the peripheral apparatus 41 to 4N and the value thereof is 11H.

Next a fourth byte DSTD designates to the CPU 50 the peripheral apparatus to which the signal Sc is to be sent, and a fifth byte SRCD designates the peripheral apparatus from which the signal Sc is transmitted. Symbols dd and ss of the data DSTD and SRCD, respectively, represent the identification codes DVID on the table I. For example, when printing data is directly supplied from the center 1 to the printer 42, DSTD = 28H and SRCD = 77H.

The n bytes of TEXT beginning with the sixth byte are data indicative to the CPU 50 of the body of text, which can include command instructions, and which is to be supplied to the peripheral apparatus 41 to 4N or the center 1. Accordingly, the length n of this data is indefinite.

Last bytes DLE and ETX next to the data TEXT are codes indicative to the CPU 50 of the end of the signal Sc and the values thereof are 10H and 03H. The TEXT is thereafter sent by the CPU 50 to its destination device.

In the data TEXT, when 10H (DLE code) is transmitted as the data, it is possible to discriminate the 10H data from the DLE code indicative of the beginning and end of the signal Sc by transmitting the 10H data twice. When the signal Sc is transmitted and received between the center 1 and the user terminal apparatus 2, it is modulated to a predetermined modulated signal by a MODEM 110 connected between the telephone line 10 and the modem interface 60a.

The peripheral apparatus (control contents) and the identification codes DVID in the table 1 are as follows.

(i) Full keyboard 41 (DVID = 20H)

This code is used, when the keyboard 41 is connected with other input and output apparatus such as a magnetic card reader and so on, to access the same. Generally, the key input data is only transmitted from the keyboard 41 to the center 1. Under such circumstances, the signal Sc becomes the same as the prior art data signal.

(ii) Display control (DVID = 24H)

This code is used for the center 1 to control the display of the display 3; i.e.. DSTD = 24H and SRCD = 77H are satisfied. The data TEXT is of one byte (n = 1) and is defined as in the following table.

| TEXT | OPERATION |
|------|-----------|
| 20H | Display videotex picture |
| 21H | Superimpose picture of other video apparatus upon videotex picture |
| 22H | Display picture of other video apparatus |
| 23H | Mix (superpose) picture of other video apparatus and videotex picture |
| 30H | Display normal picture |
| 31H | Expand left-half of inherent picture and display it on the whole picture |
| 32H | Expand right-half of inherent picture and display it on the whole picture |
| 40H | Write picture in display memory (video RAM) normally |
| 41H | Write picture data in display memory on its region corresponding to left-half of picture |
| 42H | Write picture data in display memory on its region corresponding to right-half of picture |
| 43H | Display 32H and write 40H |
| 44H | Reduce whole picture to left-half and write 42H |
| 50H | Display picture in NTSC system |
| 51H | Display picture in PAL system |

Accordingly, the hardware and software of the display 3 is constructed to be able to carry out these code TEXT operations. Since all of these functions and the apparatus necessary to carry them out in modern computer controlled raster scan display systems are known to those skilled in the art, the details of such hardware and software will not be discussed.

(iii) Timer function (DVID = 26H)

This code is used to carry out the processing in accordance with a program previously loaded onto the user terminal apparatus 2 from the center 1 when the key-in by the user and transmission of the data from the center 1 are not carried out for a certain interval. Such processing is carried out by macro codes 21H and 20H. Accordingly, this function may be used to send important or urgent information for instance in the case of accidents, disasters and so on, a warning can be given to the users.

For this operation, DSTD = 26H and SRCD = 77H and the data TEXT is formed of 8 bytes (n = 8) and is defined as follows:

TEXT = "$U_1$ $U_2$ $U_3$ $U_4$ $H_1$ $H_2$ $H_3$ $H_4$"

$U_1$ $U_2$ $U_3$ $U_4$ : timer data for the user

$H_1$ $H_2$ $H_3$ $H_4$ : timer data for the center 1

These $U_1$ to $U_4$ and $H_1$ to $H_4$ are ASCII codes and the unit is a second. The minimum period of the timer is zero second (reset) and the maximum period is 4096 seconds.

(iv) Printer 42 (DVID = 28H)

This code is used to print out the picture image by the printer 42. Whether the printer to be used is a video printer or a dot printer is set by the user. If the data is printing data, it is transmitted from the center 1 to the user terminal apparatus 2, while an acknowledge signal and a ready signal are transmitted from the user terminal apparatus 2 to the center 1 so that although DVID = 28H and 77H, the codes DSTD and SRCD are reversed by the direction of transmission. Further, the data TEXT is the data of the body. Even when the user is absent, an important message can be sent to the user via the printer using these codes and the programming within the CPU 50.

(v) Printer (DVID = 29H)

This code is used to print out the picture image by the dot printer when the user terminal apparatus 2 is connected to a videotex system of the PRESTEL system. The PRESTEL system is a standard adopted by the British Post Office. The other codes are the same as those of item (iv).

(vi) Printer (DVID = 24H)

All arrangements are the same as those on the item (v) in the case of the video printer.

(vii) Video disc player (DVID = 30H)

This code is used, when the user prepares a video disc, to make various services possible by controlling its playback. For example, when a tourist agency inputs the destination, the scenery of the destination and so on are reproduced from the video disc as an animation and also reproduced are numerals indicating the tourist's costs superimposed thereon on the basis of the data from the center 1.

Accordingly, upon reproducing the video disc, the center 1 transmits an address signal (frame number or the like) indicative of the reproducing position and a playback mode command and the like by using this code DVID. If necessary, the address signal and so on are transmitted from the video disc player 45 to the center 1 by using the code DVID. At that time, a handshake is established between the center 1 and the video disc player 45. When this code DVID is assigned, an access of data is made from a sub-port 120 (RS-232C/DTE arrangement) in the user terminal apparatus 2.

Another example is an interactive shopping guide terminal. Upon receiving a request at the center 1 from the terminal 2, the center sends to the terminal display 3 a menu list for display. The user then selects the menu to be displayed and, by means of the keyboard 41 (or some other input device) sends a signal to the center 1 to display a particular one of the menus (e.g., "shopping guide").

The center 1 then begins a shopping guide program and issues a video disk control command in the form 10H/02H/11H/30H/77H/TEXT/10H/03H where TEXT specifies a particular video track and appropriate command signals to cause the video disk player to output to the terminal 2 and its display 3, an opening image of a shopping guide. The user can then, by means of the keyboard 41, for example, request a change in the displayed image by sending appropriate commands to the center 1. In response to each such command, the center sends a response signal to the video disc player to output the requested information. Additionally, display messages for the display 3, such as "Selection Request." price lists, catagory lists, etc. are supplied in NAPLPS format by the center 1 to the terminal display 3.

This allows the advantageous use of the video disc player as an image data source since bit image data of the NAPLPS system is poor and time consuming relative to the video disk player.

Further, instead of a video disc player, equipment having communication means conforming to the specification of RS-232C can be controlled by this code DVID. The data is then sent from the peripheral device 45 or 4N to the center 1 through the modem interface 60a and the line 10. The center 1 then incorporates this data with the additional data supplied by the user terminal 2 (from keyboard 41, for example), and returns data display signals to the terminal 2 which integrates all such data into a coherent display.

(viii) Video disc timer (DVID = 31H)

When the data for the video disc player is transmitted back from the center 1 to the terminal 2 according to the item (vii), because it takes longer for the video disc player to be controlled as compared with a data transfer speed, this code is used to match the timing. This determines the spacing of data transmitted by the data TEXT.

(ix) Tape recorder 43 (DVID = 38H)

If this code is transmitted from the center 1, the data TEXT is converted to an FSK (frequency shift keying) signal of 1300 bps and is then supplied from the user terminal apparatus 2 to the tape recorder 43 through the cassette interface 60d. Accordingly, the picture information, the program, general data and so on can be saved in the cassette tape.

(x) VTR (DVID = 40H)

This code controls a VTR in the same way as the item (vii).

(xi) Television receiver (DVID = 48H)

This code controls a television receiver in the same way as the item (vii).

(xii) Audio amplifier (DVID = 50H)

This code controls an audio amplifier in the same way as the item (vii).

(xiii) CD player (DVID = 58H)

This code controls a CD player in the same way as the item (vii).

(xiv) Bell (DVID = 59H)

This code is used to ring a buzzer or other audible indicator of the user terminal apparatus 2 and the ringing period is specified by the data TEXT.

(xv) Personal computer (DVID = 60H)

This code is used to link a personal computer to the user terminal apparatus 2.

(xvi) Telex (DVID = 68H)

This code puts the user terminal apparatus 2 into a terminal apparatus mode of a telex.

(xvii) Magnetic card reader (DVID = 70H)

This code is used when a magnetic card reader is connected to the keyboard 41 and the input port of the keyboard 41 is used for the magnetic card reader, to inform the center 1 of the magnetic card input. At that time, the data TEXT becomes the data inputted by the magnetic card. Further, at that time, the input data from the magnetic card is not displayed on the display 3 but a protection routine is carried out to safeguard the information against access to unauthorized users. This can include an encryption routine, if necessary, carried out by the CPU 50.

(xviii) Computer of the center 1 (DVID = 77H)

This code indicates that the computer is the computer of the center 1.

(xix) Memory jump (DVID = 7CH)

Since the user terminal apparatus 2 is formed of a microcomputer 50, a particular program can be loaded into, for example, a RAM 80 and the program can be executed.

Therefore, this code 7CH is used to set an instruction pointer (entry address) of the CPU 50 of the user terminal apparatus 2 on the basis of the instruction from the center 1 and to execute the program at that pointer.

The CPU 50 of the user terminal apparatus 2 can be an Intel model 8088 or 8086 type, for example, so it is assumed that the data TEXT is formed of 4 bytes (n = 4) and is defined as follows:

TEXT = "$S_1$ $S_2$ $O_1$ $O_2$"

$S_1$, $S_2$ : segment base values of the instruction pointer;

$O_1$, $O_2$ : offset values of like instruction pointer.

In this case, these S1, $S_2$, $O_1$ and $O_2$ are each formed of 8088/8086 word system and DSTD = 7CH and SRCD = 77H are satisfied.

(xx) CM inserter (DVID = 7DH)

This code is a sequence prepared for the pre-processor of the user terminal apparatus 2 and the first 2 bytes of the data TEXT are assigned to the control code and the remaining byte is assigned to the body of text. If the user terminal apparatus 2 has no pre-processor and receives this code directly, this code is neglected.

(xxi) Memory down load (DVID = 7EH)

This code is used to load data, such as a program, or the like to the RAM 80 of the user terminal apparatus 2 from the center 1 and the data TEXT is formed of (6 + m) bytes and is defined as follows.

TEXT = "$S_1$, $S_2$, $O_1$, $O_2$, $1_1$, $1_2$, $D_1$, ..., Dm"

$S_1$, $S_2$ : segment base values when the data is loaded;

$O_1$, $O_2$ : offset values when the data is loaded;

$1_1$, $1_2$ : length of data ( = m);

$D_1$ to Dm = data of the body of text (m bytes).

64K bytes data can be transmitted one at a time, and when it reaches the data length "m" or when the codes DLE and ETX are transmitted, this mode is ended

Accordingly, when data such as baud rate data of the RS-232C interface for setting the modes of the peripheral apparatus 4N are stored in the RAM, the modes for the peripheral apparatus 4N can be changed by changing that data. If items (xxi) and (xiv) are executed, from the center 1, a video game program can be loaded into the user terminal apparatus 2 and the user can execute the video game program.

As described above, according to the present invention, the peripheral apparatus 41 to 4N, the display 3 or the user terminal apparatus 2 itself can be controlled by the center 1.

Therefore, according to the present invention, since the center 1 can remotely control both the terminal and its attached devices, the utility of the user terminal can be greatly expanded. Various examples of these expanded capabilities have been described. The videotex display function (of NAPLPS) and the display function of the video disc player can be combined so that the display ability of the system can be considerably expanded Important or urgent information can be adequately reported to the user by forcibly controlling the user terminal apparatus 2 by the center 1. Furthermore, the user terminal apparatus 2 can be used as a computer having various functions.

The terms and expressions which have been employed here are used as terms of description and not of limitations, and there is no intention, in the use of such terms and expressions, of excluding equivalents of the features shown and described, or portions thereof.

**Claims**

1. An information accessing user terminal (2) for communicating with a remote information data center (1), the user terminal (2) comprising

   a plurality of operative devices (41 to 4N, 3), including a display means (3), which are responsive to mode control signals;

   input/output interface means (60a) for operatively connecting the terminal to the information data center and for communicating ccmmand and data signals between the terminal and the information data center characterized by:

   a microprocessor (50) connected to the input/output interface means (60a) and each of the operative devices (41 to 4N,3) to control the operations of selected ones of the operative devices (41 to 4N,3) in response to command signals received through a keyboard (41), and in that the microprocessor (50) is capable of receiving command signals from the information data center (1), interpreting them and sending a corresponding selected mode control signal to a selected one of said operative devices whereby the information data center (1) can selectively control said operative devices (41 to 4N,3).

2. An information accessing user terminal (2) according to claim 1, characterized in that said command signals include an originating device code (SRCD), a destination device code (DSTD) and control data code (DC1).

3. An information accessing user terminal (2) according to claim 1 or 2, characterized in that said terminal (2) includes an RS-232C type interface (120) and said control data code are supplied to any auxiliary device (45-4N) connected by way of the RS-232C interface (120) to the terminal (2).

4. An information accessing user terminal (2) according to claim 1, 2 or 3, characterized in that said terminal processor means (50) generates said command signals and transmits them to the information data center (1) upon a command entered at the user terminal (2).

5. An information accessing user terminal (2) according to claim 1, 2 or 3 characterized in that the terminal processor means (50) generates said command signals and transmits them to the information data center (1) upon receiving a command signal from the information data center (1).

6. A videotex system having an information data center (1) which includes a programmed computer, said videotex system also including a remote user terminal (2) connected to the data center (1) for accessing information from the data center (1), the system including:

   a plurality of operative devices (41-4N,3), including a visual data display device (3), a keyboard (41) for entering command data, and external devices (43-4N), including data storage means (43,44), all at the user terminal (2),

   input/output means (60a) for communicatively connecting the terminal and the data center together, characterized by:

   a programmed terminal microprocessor (50) connected to each of the input/output means (60a) and to the operative devices (41-4N,3) for controlling the operations of the operative devices (41-N,3) in response to preprogrammed instructions and command signals received from the data center (1) via the input/output means (60a) or command signals entered by the user.

7. A videotex system according to claim 6 characterized in that the data center (1) and the terminal (2) exchange coded digital signals which have a format sequence beginning with one or more bytes containing a starting code (OLE, STX), a code (DC1) indicating whether an external operative device is to be controlled, a code (DSTO) indicating the particular device to be controlled, a code (SRCD) indicating the device from which the signal is sent, a plurality of bytes (TEXT) of a text message which can include command instructions to the device, and lastly end codes (DLE, ETX) indicating the end of the sequence.

8. A videotex system according to claim 6 or 7 characterized in that one of the user terminal external devices includes visual data storage means (45) for supplying image digital data for forming a visual display on the display device (3) and wherein in operation the data center (1) sends a command signal to the terminal (2) via the input/output means (60a), which signal is interpreted by the terminal processor means (50) and is sent to the designated device (45) to cause it to supply visual data to the terminal visual display device (3), and the data center (1) supplies additional display data to the terminal (2) for simultaneous display on the display means (3) with the image data from the visual data storage means (45).

9. A videotex system according to claim 6, 7 or 8 wherein the terminal (2) includes internal data storage means (80), for storing data, including program data, for the terminal processor means (50).

10. A videotex system according to claim 9 wherein the terminal (2), upon receipt of a predetermined command signal from the data center (1), stores data supplied by the center (1) in the internal data storage means (80).

11. A videotex system according to claim 10 wherein the stored data is program data to control the terminal processor means (50).

12. A videotex system according to claim 9, 10 or 11 wherein the data center (1) can send a predetermined command signal to the terminal (2) to cause the terminal processor (50) to run a select program stored in the internal data storage means (80)

13. A videotex system according to any one of claims 7 to 12 wherein the operative devices include a keyboard (41), a display (3), a timer, a printer (42), a video disc player (45), a video disc timer, a tape recorder (43), a video tape recorder, a television receiver, an audio amplifier, a compact disc player, an audible indicator, and a personal computer, and the hexadecimal codes indicating the device to be controlled and the code sending device are as follows:

EP 0 194 143 B1

| Identification code | Operative Device |
|---|---|
| 20H | keyboard |
| 24H | display |
| 26H | timer |
| 28H | printer |
| 30H | video disc player |
| 31H | video disc timer |
| 38H | tape recorder |
| 40H | video tape recorder |
| 48H | television receiver |
| 50H | audio amplifier |
| 58H | compact disc player |
| 59H | audible indicator |
| 60H | personal computer |
| 77H | computer of center |

**Revendications**

1. Terminal (2) d'utilisateur donnant accès à des informations et assurant la mise en communication avec un centre distant (1) de données d'information, le terminal (2) d'utilisateur comprenant

   plusieurs dispositifs opérationnels (41 à 4N, 3) comprenant un dispositif d'affichage (3), et qui sont commandés par des signaux de commande de mode,

   un dispositif (60a) d'interface d'entrée-sortie destiné, pendant le fonctionnement, à connecter le terminal au centre de données d'information et à faire communiquer des signaux de commande et de données entre le terminal et le centre de données d'information, caractérisé par

   un microprocesseur (50) connecté au dispositif (60a) d'interface d'entrée-sortie et à chacun des dispositifs opérationnels (41 à 4N, 3) afin qu'il commande le fonctionnement de certains dispositifs opérationnels choisis (41 à 4N, 3) d'après des signaux de commande reçus par l'intermédiaire d'un clavier (41), et en ce que le microprocesseur (50) peut recevoir des signaux de commande du centre (1) de données d'information, les interpréter et transmettre un signal correspondant de commande de mode choisi à un dispositif choisi parmi les dispositifs opérationnels, si bien que le centre (1) de données d'information peut commander sélectivement les dispositifs opérationnels (41 à 4N, 3).

2. Terminal (2) d'utilisateur donnant accès à des informations selon la revendication 1, caractérisé en ce que les signaux de commande comportent un code de dispositif expéditeur (SRCD), un code de dispositif destinataire (DSTD) et un code de données de commande (DC1).

3. Terminal (2) d'utilisateur donnant accès à des informations selon la revendication 1 ou 2, caractérisé en ce que le terminal (2) comporte une interface de type RS-232C (120), et le code des données de commande est transmis à un dispositif auxiliaire quelconque (45-4N) connecté par l'interface RS-232C (120) au terminal (2).

4. Terminal (2) d'utilisateur donnant accès à des informations selon la revendication 1, 2 ou 3, caractérisé en ce que le processeur (50) du terminal crée des signaux de commande et les transmet au centre (1) de données d'information à la suite d'une commande saisie dans le terminal (2) d'utilisateur.

11

5. Terminal (2) d'utilisateur donnant accès à des informations selon la revendication 1, 2 ou 3, caractérisé en ce que le processeur (50) du terminal crée des signaux de commande et les transmet au centre (1) de données d'information après réception d'un signal de commande provenant du centre (1) de données d'information.

6. Installation vidéotex ayant un centre (1) de données d'information qui comporte un ordinateur programmé, l'installation vidéotex comprenant aussi un terminal distant (2) d'utilisateur connecté au centre (1) de données afin qu'il ait accès à des informations provenant du centre (1) de données, l'installation comprenant :

plusieurs dispositifs opérationnels (41-4N, 3) comportant un dispositif (3) d'affichage visuel de données, un clavier (41) destiné à la saisie de données de commande, et des dispositifs externes (43-4N) comprenant des éléments (43, 44) de mémorisation de données, qui sont tous au niveau du terminal (2) de l'utilisateur,

un dispositif (60a) d'entrée-sortie destiné à connecter le terminal au centre de données afin qu'ils puissent communiquer, caractérisé par

un microprocesseur programmé (50) du terminal connecté à chacun des éléments d'entrée-sortie (60a) et aux dispositifs opérationnels (41-4N, 3) afin qu'il commande les opérations des dispositifs opérationnels (41-4N, 3) à la suite d'instructions préalablement programmées et de signaux de commande reçus du centre (1) de données par l'intermédiaire des éléments (60a) d'entrée-sortie ou de signaux de commande saisis par l'utilisateur.

7. Installation vidéotex selon la revendication 6, caractérisée en ce que le centre (1) de données et le terminal (2) échangent des signaux numériques codés qui ont une séquence de formats commençant par un ou plusieurs octets contenant un code initial (OLE, STX), un code (DC1) indiquant si un dispositif opérationnel externe doit être commandé, un code (DSTO) indiquant le dispositif particulier à commander, un code (SRCD) indiquant le dispositif à partir duquel le signal est transmis, plusieurs octets (TEXT) d'un message de texte qui peut contenir des instructions de commande transmises au dispositif, et enfin des codes de fin (DLE, ETX) indiquant la fin de la séquence.

8. Installation vidéotex selon la revendication 6 ou 7, caractérisée en ce que l'un des dispositifs externes du terminal d'utilisateur comporte un élément (45) de mémorisation de données visuelles destiné à transmettre des données numériques d'image pour la formation d'un affichage visuel sur le dispositif d'affichage (3) et dans lequel, pendant le fonctionnement, le centre (1) de données transmet un signal de commande au terminal (2) par l'intermédiaire du dispositif (60a) d'entrée-sortie, ce signal étant interprété par le processeur (50) du terminal et étant transmis au dispositif désigné (45) afin que celui-ci transmette des données visuelles au dispositif (3) d'affichage visuel du terminal, et le centre (1) de données transmet des données supplémentaires d'affichage au terminal (2) afin qu'elles soient affichées simultanément par le dispositif d'affichage (3) avec les données d'image provenant de l'élément (45) de mémorisation de données visuelles.

9. Installation vidéotex selon la revendication 6, 7 ou 8, dans laquelle le terminal (2) comporte un élément (80) de mémorisation interne de données destiné à conserver des données, comprenant des données de programme, destinées au processeur (50) du terminal.

10. Installation vidéotex selon la revendication 9,, dans laquelle le terminal (2), après réception d'un signal prédéterminé de commande provenant du centre (1) de données, mémorise les données transmises par le centre (1) dans le dispositif (80) de mémorisation interne de données.

11. Installation vidéotex selon la revendication 10, dans laquelle les données programmées sont des données de programme destinées à la commande du processeur (50) du terminal.

12. Installation vidéotex selon la revendication 9, 10 ou 11, dans laquelle le centre (1) de données peut transmettre un signal prédéterminé de commande au terminal (2) afin que le processeur (50) du terminal exécute un programme choisi mémorisé dans l'élément (80) de mémorisation interne de données.

13. Installation vidéotex selon l'une quelconque des revendications 7 à 12, dans laquelle les dispositifs opérationnels comprennent un clavier (41), un afficheur (3), une horloge, une imprimante (42), un lecteur (45) de vidéodisque, une horloge de vidéodisque, un magnétophone (43), un magnétoscope, un récepteur de télévision, un amplificateur d'audiofréquences, un lecteur de disque haute densité, un avertisseur acoustique et un ordinateur personnel, et les codes hexadécimaux indiquant le dispositif à commander et le dispositif émetteur du code sont les suivants :

| Code d'identification | Dispositif opérationnel |
|---|---|
| 20H | clavier |
| 24H | afficheur |
| 26H | horloge |
| 28H | imprimante |
| 30H | lecteur de vidéodisque |
| 31H | horloge de vidéodisque |
| 38H | magnétophone |
| 40H | magnétoscope |
| 48H | récepteur de télévision |
| 50H | amplificateur d'audiofréquences |
| 58H | lecteur de disque haute densité |
| 59H | avertisseur acoustique |
| 60H | ordinateur personnel |
| 77H | ordinateur du centre |

**Patentansprüche**

1. Informationszugriffs-Benutzerstation (2) zum Kommunizieren mit einer außenliegenden Informations-Datenzentrale (1), wobei die Benutzerstation (2)
eine Vielzahl von betriebsfähigen Einrichtungen (41 bis 4N, 3), die eine Anzeigeeinrichtung (3) enthalten, die auf Betriebsartsteuersignale anspricht, und
eine Eingabe/Ausgabe-Schnittstellenschaltung (60a) zum wirksamen Verbinden der Benutzerstation mit der Informations-Datenzentrale und zum Übertragen von Befehls- u. Datensignalen zwischen der Benutzerstation und der Informations-Datenzentrale umfaßt,
**gekennzeichnet** durch
einen Mikroprozessor (50), der mit der Eingabe/Ausgabe-Schnittstellenschaltung (60a) und jeder der betriebsfähigen Einrichtungen (41 bis 4N, 3) verbunden ist, um die Operationen von ausgewählten der betriebsfähigen Einrichtungen (41 bis 4N, 3) in Reaktion auf Befehlssignale zu steuern, die durch eine Tastatur (41) aufgenommen sind, und dadurch, daß der Mikroprozessor (50) in der Lage ist, Befehlssignale von dem Informations-Datenzentrale (1) aufzunehmen, sie zu interpretieren und dann entsprechende ausgewählte Betriebsartsteuersignale an ausgewählte der betriebsfähigen Einrichtungen zu senden, wodurch die Informations-Datenzentrale (1) die betriebsfähigen Einrichtungen (41 bis 4N,3) selektiv steuern kann.

2. Informationszugriffs-Benutzerstation (2) nach Anspruch 1, dadurch **gekennzeichnet**, daß die Befehlssignale einen Ursprungseinrichtungscode (SRCD), einen Bestimmungseinrichtungscode (DSTD) und einen Steuerdatencode (DC1) enthalten.

3. Informationszugriffs-Benutzerstation (2) nach Anspruch 1 oder 2, dadurch **gekennzeichnet**, daß die Benutzerstation (2) eine Schnittstelle (120) vom Typ RS-232C enthält und daß die Steuerdatencodes irgendeiner Hilfseinrichtung (45 bis 4N) zugeführt werden, die mittels der RS-232C-Schnittstelle (120) mit der Benutzerstation (2) verbunden ist.

4. Informationszugriffs-Benutzerstation (2) nach Anspruch 1, 2 oder 3, dadurch **gekennzeichnet,** daß die Verarbeitungseinrichtung in der Benutzerstation, nämlich der Mikroprozessor (50), die Befehlssignale erzeugt und diese zu der Informations-Datenzentrale (1) auf einen Befehl hin überträgt, der bei der Benutzerstation (2) eingegeben ist.

5. Informationszugriffs-Benutzerstation (2) nach Anspruch 1, 2 oder 3, dadurch **gekennzeichnet,** daß die Verarbeitungseinrichtung in der Benutzerstation, nämlich der Mikroprozessor (50), die Befehlssignale erzeugt und diese zu der Informations-Datenzentrale (1) auf das Empfangen eines Befehlssignals aus der Informations-Datenzentrale (1) hin überträgt.

6. Bildschirmtextsystem, das eine Informations-Datenzentrale (1) hat, welche einen programmierten Rechner enthält, wobei das Bildschirmtextsystem außerdem eine räumlich getrennte Benutzerstation (2) enthält, die mit der Datenzentrale (1) zum Zugreifenkönnen auf Information aus der Datenzentrale (1) verbunden ist, wobei das System

   eine Vielzahl von betriebsfähigen Einrichtungen (41 bis 4N, 3), die eine Datensicht-Anzeigeeinrichtung (3), eine Tastatur (41) zum Eingeben von Befehlsdaten und externe Einrichtungen (43 bis 4N), enthält, welche Datenspeichermittel (43, 44) aufweisen und alle bei der Benutzerstation (2) vorgesehen sind, und

   eine Eingabe/Ausgabe-Schnittstellenschaltung (60a) zum nachrichtenmäßigen Verbinden der Benutzerstation mit der Datenzentrale enthält,
   **gekennzeichnet** durch

   einen programmierten Prozessor (50) in der Benutzerstation, der mit der Eingabe/Ausgabe-Schnittstellenschaltung (60a) und jeder der betriebsfähigen Einrichtungen (41 bis 4N, 3) zum Steuern der Operationen der betriebsfähigen Einrichtungen (41 bis 4N, 3) in Reaktion auf vorprogrammierte Befehle und Befehlssignale, die von der Datenzentrale (1) über die Eingabe/Ausgabe-Schnittstellenschaltung (60a) empfangen sind, oder auf Befehlssignale, die durch den Benutzer eingegeben sind, verbunden ist.

7. Bildschirmtextsystem nach Anspruch 6, dadurch **gekennzeichnet,** daß die Datenzentrale (1) und die Benutzerstation (2) codierte digitale Signale austauschen, die ein Format haben mit einer Sequenz beginnend mit einem oder mehreren Bytes, welche einen Startcode (DLE, STX) beinhalten, gefolgt von einem Code (DC1), der angibt, ob eine externe betriebsfähige Einrichtung zu steuern ist, einem Code (DSTD), der die einzelne Einrichtung, die zu steuern ist, angibt, einem Code (SRCD), der die Einrichtung angibt, von welcher das Signal gesendet ist, einer Vielzahl von Bytes (TEXT) einer Textnachricht, welche Befehlsinstruktionen für die Einrichtung enthalten kann, und letztlich Endecodes (DLE, ETX), die das Ende der Sequenz angeben.

8. Bildschirmtextsystem nach Anspruch 6 oder 7, dadurch **gekennzeichnet** daß eine der externen Einrichtungen bei der Benutzerstation eine Sichtdatenspeicher-Einrichtung (45) zum Liefern von digitalen Bilddaten zur Bildung einer Sichtanzeige auf dem Bildschirm der Anzeigeeinrichtung (3) enthält und daß im Betrieb die Datenzentrale (1) ein Befehlssignal an die Benutzerstation (2) über die Eingabe/Ausgabe-Schnittstellenschaltung (60a) sendet, welches Signal durch den Prozessor (50) in der Benutzerstation interpretiert und zu der gekennzeichneten Einrichtung (45) gesendet wird, um diese zu veranlassen, Sichtdaten an die Anzeigeeinrichtung (3) bei der Benutzerstation zu liefern, und die Datenzentrale (1) zusätzliche Anzeigedaten zu der Benutzerstation (2) zum gleichzeitigen Anzeigen auf dem Bildschirm der Anzeigeeinrichtung (3) mit den Bilddaten aus der Sichtdatenspeicher-Einrichtung (45) überträgt.

9. Bildschirmtextsystem nach Anspruch 6, 7 oder 8, bei dem die Benutzerstation (2) eine interne Datenspeichereinrichtung (80) zum Speichern von Daten aufweist, die Programmdaten für den Prozessor (50) in der Benutzerstation enthält.

10. Bildschirmtextsystem nach Anspruch 9, bei dem die Benutzerstation (2) auf den Empfang eines vorbestimmten Befehlssignals aus der Datenzentrale (1) hin Daten, die durch die Datenzentrale (1) zugeführt werden, in der internen Datenspeichereinrichtung (80) speichert.

11. Bildschirmtextsystem nach Anspruch 10, bei dem die gespeicherten Daten Programmdaten zum Steuern des Prozessors (50) in der Benutzerstation sind.

**12.** Bildschirmtextsystem nach Anspruch 9, 10 oder 11, bei dem die Datenzentrale (1) ein vorbestimmtes Befehlssignal an die Benutzerstation (2) senden kann, um den Prozessor (50) in der Benutzerstation zu veranlassen, ein Auswahlprogramm, das in der internen Datenspeichereinrichtung (80) gespeichert ist, ablaufen zu lassen.

**13.** Bildschirmtextsystem nach einem der Ansprüche 7 bis 12, bei dem die betriebsfähigen Einrichtungen eine Tastatur (41), eine Anzeigeeinrichtung (3), eine Zeitsteuereinrichtung, einen Drucker (42), ein Videoplatten-Abspielgerät (45), eine Videoplatten-Zeitsteuereinrichtung, einen Magnetbandrecorder (43), einen Video-Magnetbandrecorder, einen Fernsehempfänger, einen Audioverstärker, einen CD-Spieler, einen akustischen Signalgeber und einen Personal Computer enthalten und wobei die Hexadezimalcodes, die die Einrichtung angehen, welche zu steuern ist, und die codesendende Einrichtung angeben, folgende sind:

| Identifizierungscode | Betriebsfähige Einrichtung |
|---|---|
| 20H | Tastatur |
| 24H | Anzeigeeinrichtung |
| 26H | Zeitsteuereinrichtung |
| 28H | Drucker |
| 30H | Videoplatten-Abspielgerät |
| 31H | Videoplatten-Zeitsteuereinrichtung |
| 38H | Magnetbandrecorder |
| 40H | Video-Magnetbandrecorder |
| 48H | Fernsehempfänger |
| 50H | Audioverstärker |
| 58H | CD-Spieler |
| 59H | akustischer Signalgeber |
| 60H | Personal Computer |
| 77H | Computer der Zentrale |

FIG. 1

## FIG. 2

| ←1→ | ←1→ | ←1→ | ←1→ | ←1→ | ←———— n ————→ | ←1→ | ←1→ |
|------|------|------|------|------|------|------|------|
| 10H | 02H | 11H | dd | SS | ————————— | 10H | 03H |
| DLE | STX | DC1 | DSTD | SRCD | TEXT | DLE | ETX |

## FIG. 3

```
                    ( Start )
                        │
                        ▼
                  ◇ DLE  STX ? ◇──N──┐
                        │Y           │
                        ▼            │
                  ◇  DC1  ? ◇──N──┐  │
                        │Y        │  │
                        ▼         ▼  │
              ┌──────────────┐  ┌──────────┐
              │ Destination  │  │  Other   │
              │   Device     │  │ Routine  │
              │    Set       │  └──────────┘
              └──────────────┘
                        │
                        ▼
              ┌──────────────┐
              │ Origination  │
              │   Device     │
              │    Set       │
              └──────────────┘
                        │
         ┌──────────────┤
         │              ▼
         │    ┌──────────────┐
         │    │    TEXT      │
         │    │    Set       │
         │    └──────────────┘
         │              │
         │              ▼
         └──N──◇ DLE ETX ? ◇
                        │Y
                        ▼
              ┌──────────────┐
              │  Send  TEXT  │
              │     to       │
              │ Destination  │
              └──────────────┘
                        │
                        ▼
                    ( End )
```